# FASCICULE DE BREVET EUROPEEN

(11) **EP 0 949 116 B1**
(45) Date de publication et mention de la délivrance du brevet: **11.08.2004**
(21) Numéro de dépôt: 99400849.8
(22) Date de dépôt: 07.04.1999
(51) Int. Cl.: B60N 3/00

(54) **Agencement de tablettes escamotables pour sieges d'automobile**
Anordnung von verstaubaren Tischplatten für Kraftfahrzeugsitze
Arrangement of retractable trays for vehicle seats

(30) Priorité: 07.04.1998 FR 9804307
(43) Date de publication de la demande: 13.10.1999
(73) Titulaire: Renault s.a.s., 92100 Boulogne Billancourt (FR)
(72) Inventeur: Bertholon, Patrick, 92310 Sevres (FR); Velay, Michel, 78640 Saint Germain de la Grange (FR)

(56) Documents cités:
- EP-A- 0 778 174
- DE-A- 4 343 242
- DE-C- 4 327 869
- DE-U- 9 017 488
- DE-U- 9 203 093
- DE-U- 29 603 294
- US-A- 3 588 172
- US-A- 5 562 331

## Description

La présente invention est relative à un agencement de tablettes escamotables pour sièges d'automobile.

Les passagers d'une automobile ont diverses occupations lors de leur séjour dans l'habitacle : ils peuvent être amenés à lire, à écrire, à téléphoner, à boire, à manger, à fumer etc.

Pour cette raison, certaines automobiles sont équipées de tablettes escamotables, éventuellement pourvues d'accessoires tels que des cendriers, des porte-stylos et des porte-verres.

On trouve dans la technique antérieure trois catégories de tablettes escamotables.

La première catégorie comprend les tablettes escamotables qui se rangent dans les portières. L'inconvénient majeur d'une tablette escamotable de ce type est qu'elle doit être rangée lorsqu'on désire ouvrir la portière.

La deuxième catégorie comprend les tablettes escamotables qui se rangent devant le passager, dans le dossier du siège avant pour un passager assis sur le siège arrière, et dans le tableau de bord pour un passager assis à côté du conducteur. L'inconvénient majeur d'une tablette escamotable de ce type est que la distance qui la sépare du passager varie avec le réglage de la position du siège avant.

La troisième catégorie comprend les tablettes escamotables qui se rangent dans un accoudoir. Des tablettes escamotables de ce type sont enseignées par le brevet américain n° 5.562.331 au nom de Prince Corporation.

Dans ce brevet, deux tablettes escamotables rectangulaires sont articulées sur un couvercle de l'accoudoir autour d'axes de rotation de direction perpendiculaire à celle de l'axe de rotation de l'accoudoir.

La longueur de ces tablettes escamotables est limitée par la largeur du couvercle de l'accoudoir, et il s'avère en pratique que ces tablettes sont trop courtes pour être vraiment utiles.

En outre, ces tablettes escamotables sont situées sur le côté du passager, au lieu d'être situées devant lui. Dans ces conditions, il n'est par exemple pas possible de les utiliser pour écrire.

La publication DE-A-4343242 (correspondant au préambule de la revendication indépendante) décrit des tablettes escamotables qui peuvent être disposées devant un utilisateur.

La présente invention a pour but de réaliser un agencement de tablettes escamotables pour habitacle d'automobile qui ne présente pas les inconvénients mentionnés ci-dessus.

On atteint ce but de l'invention, ainsi que d'autres qui apparaîtront à la lecture de la description qui va suivre, avec un agencement de tablettes escamotables pour sièges d'automobile disposés en ligne avec les caractéristiques techniques de la revendication indépendante, à savoir, entre autre, au moins un desdits sièges comportant un dossier mobile entre une position sensiblement verticale et une position sensiblement horizontale, cet agencement étant remarquable en ce qu'il comprend au moins une tablette montée mobile sur ledit dossier, entre une position escamotée où elle est accolée au dos dudit dossier, et une position de service située, après basculement du dossier en position horizontale, au droit d'un siège adjacent au siège comportant ledit dossier, pour être utilisable par une personne occupant ledit siège adjacent.

Suivant une caractéristique additionnelle de l'agencement selon l'invention, ledit dossier mobile est disposé entre les dossiers de deux sièges adjacents, en ligne avec ceux-ci quand il est dans sa position sensiblement verticale.

Suivant une caractéristique additionnelle de l'agencement selon l'invention, ledit dossier mobile porte deux tablettes déployables chacune au droit d'un des deux sièges adjacents.

Suivant une caractéristique de l'agencement selon l'invention, chaque tablette est articulée sur le dos dudit dossier mobile, autour d'un axe incliné sensiblement à 45° sur l'axe médian dudit dos.

Comme on le verra plus loin, l'agencement selon l'invention procure des tablettes escamotables très ergonomiques, particulièrement adaptées à des activités de voyage.

D'autres caractéristiques et avantages de la présente invention apparaîtront à la lecture de la description qui va suivre et à l'examen des dessins annexés dans lesquels :
- la figure 1 est une vue en perspective de l'agencement selon l'invention, mis en oeuvre sur les sièges arrière d'un habitacle d'automobile;
- la figure 2 est une vue de l'agencement selon l'invention suivant la coupe II de la figure 1, les tablettes escamotables étant en position de service;
- la figure 3 est analogue à la figure 2, à ceci près que les tablettes escamotables sont représentées en position escamotée.

Sur ces figures et sur les suivantes, des références numériques identiques représentent des organes ou éléments identiques ou analogues.

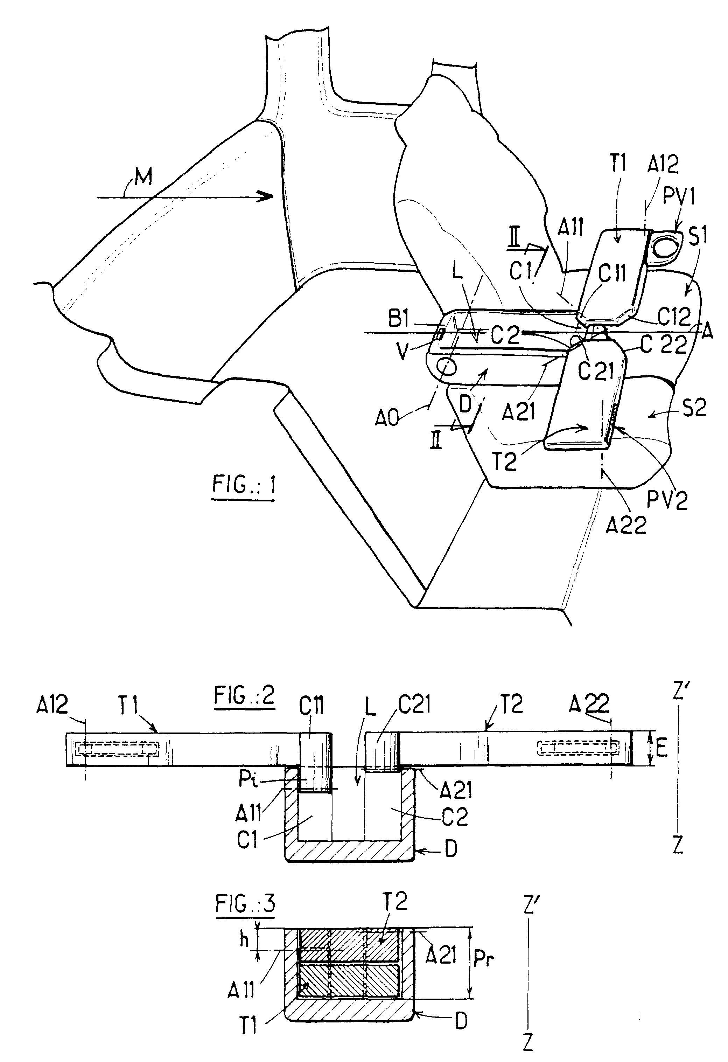

Dans ce qui suit, les indications « supérieur » et « inférieur » s'entendent par rapport à la verticale ZZ' représentée sur les figures 2 et 3.

L'habitacle du véhicule choisi pour illustrer la présente invention comporte trois sièges arrière disposés en ligne. Deux d'entre eux seulement ont été représentés sur la figure 1 : le siège gauche S1 et le siège central S2.

Le siège central S2 comporte un dossier mobile D de forme sensiblement parallélépipédique.

Ce dossier mobile est monté rotatif entre les deux sièges adjacents au siège central S2, de sorte qu'il peut basculer d'une position sensiblement verticale (non représentée) vers une position sensiblement horizontale (visible sur la figure 1) en pivotant autour d'un axe A0 sensiblement transversal à la direction de marche M de l'automobile.

Ce dossier mobile comporte dans son dos un logement L de forme globalement parallélépipédique dont le fond, les parois et les bords supérieurs sont formés dans un matériau plastique rigide.

Les premier C1 et deuxième C2 coins de ce logement opposés à ceux adjacents à l'axe A0 sont chanfreinés à 45°.

Des première T1 et deuxième T2 tablettes escamotables de même épaisseur E (voir figure 2) comportent des contours correspondant à celui du logement L. Les tablettes T1, T2 comportent ainsi chacune, respectivement, des premiers C11, C21 et deuxièmes C12, C22 coins chanfreinés destinés à venir en vis à vis des coins C1 et C2 du logement L en position escamotée.

Comme on peut le voir sur la figure 2, le premier coin C11 de la première tablette escamotable T1 est prolongé par un pied Pi. Un organe d'articulation, tel qu'une charnière classique (non représentée), relie la partie inférieure du pied Pi au premier coin C1 du logement L.

De même, un organe d'articulation relie la partie inférieure du premier coin C21 de la deuxième tablette escamotable T2 à la partie supérieure du deuxième coin C2 du logement L.

Les première T1 et deuxième T2 tablettes peuvent ainsi pivoter respectivement autour de premier A11 et deuxième A21 axes sensiblement horizontaux et formant chacun un angle d'environ 45° avec l'axe médian A du dos du dossier mobile D.

Pour le bon fonctionnement de l'invention, il est impératif de respecter certains rapports de dimensions. Tout d'abord, la profondeur Pr du logement L doit être sensiblement égale à deux fois l'épaisseur E des tablettes escamotables T1, T2. Ensuite, la hauteur h séparant l'axe de rotation A11 du bord supérieur du logement L doit être sensiblement égale à la moitié de E.

Chaque tablette escamotable T1, T2 peut être équipée d'accessoires tels que des porte-verres PV1, PV2, visibles sur les figures 1 et 2. Sur la figure 1, le porte-verre PV1 est représenté en position déployée et le porte-verre PV2 est représenté en position rétractée.

Dans le mode de réalisation représenté, chacun de ces porte-verres consiste une plaque ayant sensiblement la forme d'un quart de disque, pourvue d'un trou destiné à accueillir un verre.

Ces porte-verres sont susceptibles de se rétracter dans les tablettes escamotables en pivotant autour d'axes A12, A22 perpendiculaires à leurs plans.

On peut également envisager d'équiper les tablettes escamotables T1, T2 d'autres accessoires tels que des rainures destinées à maintenir des stylos en place (porte-stylos), ou tels que des cendriers escamotables.

Il va de soi que l'ergonomie de l'invention sera nettement améliorée en plaçant sur les tablettes escamotables et sur leurs accessoires des organes facilitant leur préhension pour les opérations de rangement/déploiement.

Ces organes, non représentés, peuvent notamment consister en des orifices formés dans l'épaisseur des tablettes escamotables, permettant de glisser un doigt afin de les extraire du logement L.

Enfin, le dossier mobile D pourra avantageusement comporter un organe de fermeture tel qu'un verrou V placé sur le bord arrière B1 du logement L, afin de maintenir les tablettes escamotables dans leur position de rangement lorsqu'on redresse verticalement le dossier mobile.

L'utilisation de l'agencement selon l'invention découle directement de la description qui précède.

Le dossier mobile D étant en position sensiblement verticale, c'est-à-dire disposé en ligne entre les dossiers des deux sièges adjacents au siège central S2, on le déploie pour l'amener dans sa position sensiblement horizontale représentée sur la figure 1.

On ouvre le verrou V, puis on déploie la deuxième tablette escamotable T2 rangée au dessus de la première tablette escamotable T1 dans le logement L pour l'amener dans sa position de service représentée sur la figure 1.

Si cela est nécessaire, c'est-à-dire si un deuxième passager en éprouve le besoin, on peut déployer également la première tablette escamotable T1.

Les deux tablettes escamotables sont alors disposées symétriquement par rapport à l'axe médian A du dos du dossier mobile D, chacune au droit d'un siège adjacent au siège central S2.

Une fois les tablettes déployées, on peut éventuellement extraire les porte-verres PV1, PV2 de leurs logements.

La stabilité des tablettes escamotables en position de service est assurée par la rigidité du matériau formant le logement L.

Le déploiement des tablettes autour d'axes situés près de l'extrémité avant du dossier mobile D permet d'atteindre une position de service où les tablettes sont situées devant le passager.

En outre, l'orientation des axes de rotation des tablettes, permettant d'atteindre une position de service perpendiculaire à la position escamotée, rend possible l'utilisation de tablettes de longueur satisfaisante.

Celles-ci présentent en outre une surface sensiblement égale à celle du dossier D, donc confortable pour l'utilisateur.

Pour ranger les deux tablettes, on effectue l'ensemble des opérations décrites ci-dessus dans l'ordre inverse.

Les rapports de dimensions évoqués plus haut sont critiques pour permettre un rangement convenable (voir figures 2 et 3).

La position de l'axe de rotation A11 par rapport au bord supérieur du logement L, combinée avec l'utilisation du pied Pi, permet de ranger la première tablette escamotable T1 dans le fond du logement L.

Il reste alors suffisamment de place pour ranger la deuxième tablette escamotable T2, qui vient se placer convenablement sur la première tablette escamotable T1 grâce à son axe de rotation A21 placé près du bord du logement L.

La profondeur Pr du logement L étant sensiblement égale à deux fois l'épaisseur E des tablettes escamotables, il en résulte qu'en position rangée, ces tablettes arrivent au même niveau que les bords du logement L.

Bien entendu, l'invention n'est pas limitée au mode de réalisation décrit et représenté qui n'a été donné qu'à titre d'exemple.

C'est ainsi également que l'on pourrait envisager que les tablettes escamotables comportent des volets rabattables permettant d'augmenter leur surface utile lorsqu'elles sont en position de service.

C'est ainsi encore que l'on pourrait envisager que lesdites tablettes soient montées sur une partie dudit dossier mobile formant accoudoir escamotable pour au moins un siège adjacent.

## Revendications

1. Agencement de tablettes escamotables (T1, T2) pour sièges (S1, S2) d' automobile disposés en ligne, au moins un (S2) desdits sièges comportant un dossier (D) mobile entre une position sensiblement verticale et une position sensiblement horizontale, ledit agencement comprenant au moins une tablette (T1, T2) montée mobile sur ledit dossier (D) autour d'un axe (A11, A21) incliné sensiblement à 45° par rapport à l'axe médian (A) du dos de ce dossier (D), entre une position escamotée où elle est accolée audit dos, et une position de service située, après basculement dudit dossier (D) en position horizontale, au droit d'un siège adjacent (S1) au siège (S2) comportant ledit dossier (D), pour être utilisable par une personne occupant ledit siège adjacent (S1), **caractérisé en ce que** ledit axe (A11, A21) est sensiblement parallèle au/aux plan/s de ladite au moins une tablette (T1, T2).

2. Agencement conforme à la revendication 1, **caractérisé en se que** ledit dossier mobile (D) est disposé entre les dossiers de deux sièges, adjacents (S1), en ligne avec ceux-ci quand il est dans sa position sensiblement verticale.

3. Agencement conforme à la revendication 2, **caractérisé en ce que** ledit dossier mobile (D) porte deux tablettes escamotables (T1,T2) susceptibles d'être déployées chacune au droit d'un desdits deux sièges adj acents (S1).

4. Agencement conforme à l'une quelconque des revendications précédentes, **caractérisé en ce qu'**en position escamotée, chaque tablette.. escamotable (T1, T2) est rangée dans un logement (L) formé dans le dos dudit dossier mobile (D).

5. Agencement conforme aux revendications 3 et 4, **caractérisé en ce qu'**en position escamotée, lesdites deux tablettes escamotables (T1, T2) sont rangées l'une sur l'autre dans ledit logement (L).

6. Agencement conforme à l'une quelconque des revendications précédentes, **caractérisé en ce que** chaque tablette escamotable (T1, T2) est pourvue d'accessoires du groupe constitué par un cendrier, un porte-stylo ou un porte-verre (PV1, PV2).

7. Agencement conforme à la revendication 6, **caractérisé en ce que** chaque tablette escamotable (T1, T2) comporte un porte-verre (PV1, PV2) susceptible de s'escamoter dans son épaisseur en pivotant autour d'un axe (A12, A22) perpendiculaire à son plan.

8. Agencement conforme à l'une quelconque des revendications précédentes, **caractérisé en ce qu'**il comporte des moyens de verrouillage (V) de la (des) tablette(s) escamotable(s) (T1, T2) en position escamotée.

9. Agencement conforme à l'une quelconque des revendications précédentes, **caractérisé en ce que** lesdites tablettes escamotables (T1, T2) sont montées sur une partie dudit dossier mobile (D) formant accoudoir escamotable pour au moins un siège adjacent (S1).

## Claims

1. Arrangement of retractable panels (T1, T2) for car seats (S1, S2) arranged in line, at least one (S2) of said seats comprising a backrest (D) mobile between an approximately vertical position and an approximately horizontal position, said arrangement comprising at least one panel (T1, T2) mounted in a mobile fashion on said backrest (D) about an axis (A11, A21) inclined at approximately 45° relative to the median axis (A) of the back of this backrest (D) between a retracted position where it is attached to said back, and a service position situated, after tilting of said backrest (D) into the horizontal position, to the right of a seat (S1) adjacent to the seat (S2) comprising said backrest (D), in order to be useable by a person occupying said adjacent seat (S1), **characterized in that** said axis (A11, A21) is approximately parallel to the plane/s of said at least one panel (T1, T2).

2. Arrangement according to claim 1, **characterized in that** said mobile backrest (D) is arranged between the backrests of two adjacent seats (S1), in line with the latter when it is in its approximately vertical position.

3. Arrangement according to claim 2, **characterized in that** said mobile backrest (D) carries two retractable panels (T1, T2) each capable of being unfolded to the right of one of said two adjacent seats (S1).

4. Arrangement according to any one of the preceding claims, **characterized in that** in retracted position, each retractable panel (T1, T2) is put away in a recess (L) formed in the back of said mobile backrest (D).

5. Arrangement according to claims 3 and 4, **characterized in that** in retracted position, said two retractable panels (T1, T2) are put away one on top of the other in said recess (L).

6. Arrangement according to any one of the preceding claims, **characterized in that** each retractable panel (T1, T2) is provided with accessories from the group constituted by an ashtray, a pen-holder or a glass-holder (PV1, PV2).

7. Arrangement according to claim 6, **characterized in that** each retractable panel (T1, T2) comprises a glass-holder (PV1, PV2) capable of being retracted into its thickness by pivoting about an axis A12, A22 perpendicular to its plane.

8. Arrangement according to any one of the preceding claims, **characterized in that** it comprises means for locking (V) the retractable panel(s) (T1, T2) in the retracted position.

9. Arrangement according to any one of the preceding claims, **characterized in that** said retractable panels (T1, T2) are mounted on part of said mobile backrest (D) forming a retractable armrest for at least one adjacent seat (S 1).

## Patentansprüche

1. Vorrichtung von einklappbaren Platten (T1, T2) für Automobilsitze (S l, S2), die auf einer Linie angeordnet sind, wobei mindestens einer (S2) der Sitze eine Rückenlehne (D) aufweist, die beweglich ist zwischen einer im Wesentlichen senkrechten und einer im Wesentlichen waagrechten Position, wobei die Vorrichtung mindestens eine Platte (T1, T2) aufweist, die an dieser Rückenlehne (D) um eine Achse (A11, A21), die im Verhältnis zur Mittellinie (A) des Rückens der Rückenlehne (D) im Wesentlichen um 45° schräg gestellt ist, beweglich befestigt ist zwischen einer ausgeklappten Position, in der sie an den Rücken anschließt, und einer Verwendungsposition, die, nach Kippen der Rückenlehne (D) in waagrechte Position, über einem Sitz (S1) gelegen ist, der an den Sitz (S2) angrenzt, der die Rückenlehne (D) aufweist, um von einer Person benutzt werden zu können, die diesen angrenzenden Sitz (S1) belegt, **dadurch gekennzeichnet, dass** die Achse (A11, A21) im Wesentlichen parallel zu der/den Ebene(n) der mindestens einen Platte (T1, T2) ist.

2. Vorrichtung gemäß Anspruch 1, **dadurch gekennzeichnet, dass** die bewegliche Rückenlehne (D) zwischen den Rückenlehnen zweier benachbarter Sitze (S1) liegt, auf einer Linie mit diesen, wenn sie in ihrer im Wesentlichen senkrechten Position ist.

3. Vorrichtung gemäß Anspruch 2, **dadurch gekennzeichnet, dass** die bewegliche Rückenlehne (D) zwei einklappbare Platten (T1, T2) trägt, die jeweils über einem der zwei benachbarten Sitze (S1) ausgebreitet werden können.

4. Vorrichtung gemäß irgend einem der vorhergehenden Ansprüche, **dadurch gekennzeichnet, dass** in eingeklappter Position jede der einklappbaren Platten (T1, T2) in einem Stauraum (L) untergebracht wird, der im Rücken der beweglichen Rückenlehne (D) gebildet wird.

5. Vorrichtung gemäß den Ansprüchen 3 und 4, **dadurch gekennzeichnet, dass** in eingeklappter Position die zwei einklappbaren Platten (T1, T2) in diesem Stauraum (L) aufeinander untergebracht sind.

6. Vorrichtung gemäß irgend einem der vorhergehenden Ansprüche, **dadurch gekennzeichnet, dass** jede der einklappbaren Platten (T1, T2) mit Zubehör der Gruppe ausgestattet ist, die aus einem Aschenbecher, einem Stifthalter oder einem Becherhalter (PV1, PV2) gebildet wird.

7. Vorrichtung gemäß Anspruch 6, **dadurch gekennzeichnet, dass** jede der einklappbaren Platten (T1, T2) einen Becherhalter (PV1, PV2) aufweist, der in ihrer Dicke eingeklappt werden kann, indem er sich um eine Achse (A12, A22) dreht, die rechtwinklig zu ihrer Ebene liegt.

8. Vorrichtung gemäß irgend einem der vorhergehenden Ansprüche, **dadurch gekennzeichnet, dass** sie Mittel zur Verriegelung (V) der einklappbaren Platte(n) (T1, T2) in eingeklappter Position aufweist.

9. Vorrichtung gemäß irgend einem der vorhergehenden Ansprüche, **dadurch gekennzeichnet, dass** die einklappbaren Platten (T1, T2) auf einem Teil der beweglichen Rückenlehne (D) befestigt sind, das eine einklappbare Armlehne für mindestens einen benachbarten Sitz (S1) bildet.
